# EUROPEAN PATENT SPECIFICATION

(11) **EP 1 732 680 B1**
(45) Date of publication and mention of the grant of the patent: **30.07.2008**
(21) Application number: 04711572.0
(22) Date of filing: 17.02.2004
(51) Int. Cl.: B01J 13/04, B01J 13/22, A23L 1/22, A23P 1/04

(54) **COATED SHERICAL SEAMLESS FILLED CAPSULES**
ÜBERZOGENE, SPHÄRISCHE, NAHTLOSE, GEFÜLLTE KAPSELN
CAPSULES REMPLIES ,SANS SOUDURE,SPHERIQUES,REVETUES

(43) Date of publication of application: 20.12.2006
(73) Proprietor: Symrise GmbH & Co. KG, 37603 Holzminden (DE)
(72) Inventor: WONSCHIK, Jochen, 37647 Brevörde (DE); MACHINEK, Arnold, 37603 Holzminden (DE); KOSCHORRECK, Carsten, 37603 Holzminden (DE)
(74) Representative: Stilkenböhmer, Uwe Michael
(86) International application number: PCT/EP2004/001490
(87) International publication number: WO 2005/077521

(56) References cited:
- EP-A- 0 778 083
- WO-A-91/17821
- US-B1- 6 200 603
- US-B1- 6 238 690

## Description

The present invention relates to coated spherical capsules comprising a coating-free capsule having a liquid or viscous core and a seamless, solid shell surrounding this core, and a seamless, solid coating surrounding said coating-free capsule; the core of the coating-free capsule comprises a flavouring component, the shell comprises gelatine or alginate and the coating comprises sugars or sugar alcohols. The invention also relates to methods for the preparation of such capsules. The coated spherical capsules according to the invention are suitable for immediate consumption without further processing and can be sucked or chewed in the mouth without the shell being found to be disturbing during consumption, in particular without being sticky or tacky.

Flavourings are used in foods in order to achieve taste impressions. In the sense of the present invention a flavouring is to be understood to be a single substance (flavouring) or a mixture of substances (flavourings) which have the organoleptic property or properties. These organoleptic properties include the characteristic of imparting a specific odour or taste to a mixture and the characteristic of giving rise to specific stimuli, which are transmitted via the trigeminus nerve and are thus detected.

Oils, such as, for example, vegetable oils and other triglycerides, which are used as solvents for the flavouring and themselves have a neutral odour and taste are not regarded as flavourings below.

If flavourings are to be ingested by a consumer in portions in the form of a liquid, the use of a capsule in which a core of a quantity of liquid containing flavouring is surrounded by a solid shell is a common measure. In this context the following problems and requirements, in particular, must be taken into consideration:
1. Achieving a pleasant feeling in the mouth when consuming gelatine capsules is a technological challenge. In particular, hitherto it has been found to be disadvantageous that the majority of shells of ready-to-consume capsules available commercially are detectable as an unpleasant, rubbery, tough residue. Corresponding observations are made and found to be particularly negative especially in the case of larger filled capsules with diameter of about 4 mm.
2. On direct consumption, i.e. by placing the capsule directly into the oral cavity, the shell of said capsule in the mouth should preferably (a) not have a disturbing haptic effect, (b) dissolve rapidly and (c) not be sticky or tacky. The core liquid containing flavouring that is to be released or is released should give rise to a sensory effect with a substantial impact in the mouth.
3. A capsule diameter of about 5 mm and more is required for better handling and portioning in the case of direct consumption and a strong flavouring impact by a single capsule in the mouth.

Spherical coating-free.capsules having a liquid core and a solid shell surrounding this core are known and capsules having a diameter of more than 4 mm can, for example, be prepared by the rotary die method or, in the case of the capsules having a seamless shell, which are of particular interest, by a drip method using a multi-component nozzle (cf. Bauer, Frömming, Führer; Pharmazeutische Technologie; 1997). This method is also designated a multi-component nozzle method below. In this context (insofar as nothing different results from the context) references to the multi-component nozzle method are also to be understood as references to a multiplicity of related methods for the preparation of seamless coating-free capsules.

For example, in the multi-component nozzle method capsules having a seamless shell are prepared by a drip method. With this method a lipophilic core material and a hot gelatine solution are usually simultaneously pumped through a concentric multi-component nozzle so that they drip into a cold lipophilic cooling liquid, for example vegetable oil. With this method the nozzle can dip directly into the cooling liquid. When they drip in the capsules assume a ball shape (spherical shape) as a result of the surface tensions. As a result of the fall in temperature on contact with the cooling liquid, the gelatine-containing seamless capsule shell solidifies.

US 4,481,157 and US 4,251,195 describe methods and equipment for the continuous preparation of seamless capsules by the multi-component nozzle method where the nozzle dips into the cooling liquid.

WO 03/055587 A1 relates to mononuclearly filled seamless microcapsules comprising a capsule shell made of a hardened capsule material based on an acid polysaccharide, e.g. alginate, and a filling material, which is enclosed on all sides by the capsule shell and which comprises an organoleptically effective quantity of an aroma. These microcapsules can have diameters of up to 5 mm.

However, the larger a coating-free capsule the more difficult it is to achieve a thin, stable shell, since the stability of the coating-free capsule decreases substantially on drying and during transport as the capsule diameter/shell thickness ratio increases. Moreover, the centring of the core and the uniform enclosure of the core by a shell is extremely problematical in the case of large capsules.

US 5,300,305 describes seamless capsules having a diameter of 2 - 9 mm, which are suitable for immediate consumption and are used to control bad breath. With these capsules, active substances for bad breath control are incorporated in the shell of the capsules on solubility grounds. The capsules are intended to remain in the mouth for a prolonged period so that the active substance influencing the bad breath is able to dissolve from the shell and give rise to a long-lasting effect in the mouth. The shell thickness is in the range of 30 µm to 2 mm. Illustrative embodiments show shell contents of not less than 13 % (m/m) and only low plasticiser contents (sorbitol < 10 %, based on the shell). The capsule contains up to 25 % (m/m) flavouring in the core, based on the total mass of the capsule. The capsules are, for example, prepared by a multi-component nozzle process. The capsule shell was developed with a view to slow dissolution in the mouth and the Applicant's experiments have now shown that it proves to be rather hard and annoying when sucked. Accordingly, in particular the adverse sensation in the mouth, that is caused by the shell residues dissolving only slowly in the mouth, is a disadvantage when using the capsule described in US 5, 300,305 for an immediate, strong flavouring impression. Moreover, as has been mentioned, the flavouring content in the capsule is restricted to 25 % and it is therefore not possible to achieve a strong flavouring impact.

WO 96/29986 describes seamless capsules having a diameter of 2 - 9 mm, which contain a pharmaceutical active substance against coughing. The capsule shells are 30 µm - 500 µm thick and are intended to dissolve within 3.5 - 5 minutes. The capsule shells contain at least 10 % water. A shell thickness to capsule diameter ratio is not given.

A disadvantage of the capsules according to WO 96/29986 is, in particular, the indicated slow rate of dissolution of the shell.

WO 00/51574 describes chewable, soft gelatin capsules having a sheath formed of a mixture of a low bloom and a medium bloom gelatins, a plasticizer, water, and preferably a moisture retention agent to enhance the machinability and integrity of the sheath composition; and a fill of an active material in a carrier liquid.

Since all the above described capsules have an outer shell comprising gelatine, alginate or similar shell materials, they all suffer to some extent from the dissolution properties of the shell material in the oral cavity, causing (a) an unpleasant haptic effect, (b) a comparatively long residence time in the oral cavity during dissolution and (c) a certain stickiness or tackiness.

WO 03/045166 concerns a capsule comprising a core and a coating including at least a film-forming polymer, characterized in that it has a total solubilization time of its coating not more than 85s according to a test A. In example 4 a confectionery product for oral hygiene is produced. A seamless gelatine capsule is coated in a coating turbine using maltitol, gum arabic, shellac gum, vegetable oil, titanium dioxide and a menthol-flavouring powder. It was observed that this coated capsule does not leave a skin effect at the end of eating and leaves a powerful aromatic impact in the mouth. The coating composition was not specified in more detail.

US 6,200,603 discloses a coated capsule containing a fill composition, the coated capsule comprising a gelatin shell having water and a plasticizer, wherein the ratio of plasticizer to gelatin in the shell composition ranges from 0.7 to 1.2, preferably from 0.8 to 1.0, and a flavored coating thereon, wherein each of said flavored coating and shell material comprises a sugar or sugar substitute adapted to form a stable bond between the shell and the coating and to prevent the coating from drawing water or plasticizer from the gelatin shell.

A breath freshener is provided in the form of a filled gelatin capsule to which is applied a flavored coating. Such a coated capsule is especially suitable for swallowing prior to rupture of the capsule, whereby the capsule fill is not released until the capsule shell is broken down in the stomach. In a preferred embodiment the composition of the shell material of the coated capsule comprises: gelatin in an amount from 33 to 58% by weight; glycerol in an amount from 16 to 31% by weight; sugar or sugar substitute in an amount from 15 to 30% by weight; and water in an amount up to 15% by weight.

An example for a breath freshener in the form of a filled capsule is given. The capsule consists of 29.8% core materials, 18.6% shell materials and 51.6% by weight of coating materials. The total weight of the capsule materials amounts to 537 mg.

A primary aim of the present invention was to indicate spherical capsules of the initially mentioned type that are suitable for immediate consumption without further processing and can be sucked or chewed in the mouth without the shell being found to be annoying, in particular without being sticky or tacky, i.e. without sticking to teeth, tongue, gums or palatine. In addition a pleasant mouthfeel should be experienced when consuming the spherical capsule. At least some, but preferably all, the problems and requirements indicated above were to be solved or taken into account. In addition, a method of preparation for the capsules that is practicable on an industrial scale was to be indicated.

A particular (subsidiary) aim of the present invention was to indicate a coating-free spherical seamless capsule having a shell only 20 - 200 µm thick, a diameter in the range of 3 - 7 mm and a shell thickness to capsule diameter ratio in the range of 0.005 - 0.05, the shell of which, which is still moist during the preparation prior to drying, still remains dimensionally stable even at temperatures of 40 °C - 60 °C. By this means both a higher drying rate (as a result of the possible use of higher drying temperatures) and also improved storability and transportability were to be achieved.

According to the invention the above problem is solved by providing a spherical coated capsule comprising
(a) a coating-free capsule having (i) a liquid or viscous core and (ii) a seamless solid shell surrounding this core, and
(b) a seamless, solid coating surrounding said coating-free capsule, wherein
   - the diameter of the coated capsule is in the range of 5 - 9 mm,
   - the solid coating comprises at least one sugar or sugar-alcohol in an amount from about 30 - 90% (m/m), based on the total mass of the coated capsule,
   - the diameter of the coating-free capsule is in the range of 3 - 7 mm,
   - the thickness of the shell of said coating-free capsule is in the range of 20 - 200 µm,
   - the ratio of shell thickness to diameter of said coating-free capsule is in the range of 0.004-0.04,
   - the shell of said coating-free capsule contains 70 - 90 % (m/m) gelatine or alginate and 10 - 30 % (m/m) plasticiser, based on the solids content of said shell, and
   - the core has a flavouring content in the range of 1 - 100 % (m/m), based on the total mass of the core.

The coating-free capsule of the capsules of the present invention can be prepared by a method comprising the following steps:
- pumping a liquid or viscous core material and a gelatine or alginate-containing curable shell mixture simultaneously through a concentric multi-component nozzle so that they drip into a cooling liquid with the formation of a capsule,
- drying said capsule, and
- coating the resulting dried capsule (hereinafter also: coating-free capsule), optionally only after applying an intermediate layer or intermediate layers to the dried capsule.

Preferred embodiments of the present invention are described in the following part of the description and the attached claims.

Throughout the present description a capsule is designated a spherical capsule insofar as the ratio between the largest and the smallest diameter of the capsule is not more than 1.2. This arithmetic mean of the largest and the smallest diameter of the coating-free capsule is designated as the diameter of a coating-free capsule according to the invention below.

For the organoleptic assessment it is particularly advantageous if the diameter of the coating-free capsule is in the range of about 3 - 6 mm, the thickness of the shell is in the range of about 50 - 150 µm and the ratio of shell thickness to coating-free capsule diameter is in the range of about 0.01 - 0.03. It is most advantageous if the diameter of the coating-free capsule is in the range of 4 - 6 mm, the thickness of the shell is in the range of 50 - 90 µm and the ratio of shell thickness to diameter of the coating-free capsule is in the range of 0.01 - 0.02.

Preferred embodiments of the coating-free capsule being the inner part of the capsules according to the invention result from the following description, examples, and patent claims.

Unless indicated otherwise, all percentages and ratios given are by weight and all conditions (e.g. state of aggregation) refer to 20°C.

### SHELL THICKNESS:

For rapid dissolution of the shell of a coating-free capsule (as part of the capsule of the present invention) in the mouth the shell thickness should be as small as possible. For a constant core/shell mass ratio the shell thickness increases substantially with increasing diameter of the coating-free capsule.

The coating-free capsules have a shell thickness of only 20 µm - 200 µm despite the large capsule diameter of 3 - 7 mm. In these capsules the ratio of shell thickness to capsule diameter is in the range of 0.004 - 0.04. These data relate to the dried capsule. The coating-free capsule diameter can be determined using a micrometer screw. For determination of the shell thickness a cross-section of the coating-free capsule is prepared. The thickness of the shell can be determined via a microscope with image processing. To this end the thickness of the coating-free capsule shell is measured at various points in the latter and the mathematical mean for the shell thickness is determined.

With the composition of the shell selected in accordance with the invention (in this context see below) high process and transport stability, adequate elasticity, good biteability and a sufficiently high dissolving power in the mouth are ensured.

### COMPOSITION OF THE SHELL:

### Viscosity of the shell mixture/gel point:

When shaping a coating-free capsule (as part of the capsule of the present invention) by means of a multi-component nozzle method particular attention has to be paid to the viscosity and the gelling characteristics of the curable shell mixture. Too low a viscosity or too low a gel point prevent a capsule shell that is sufficiently solid in the wet state. Corresponding capsules would be mechanically destroyed by the further processing steps, such as, for example, centrifuging. Too high a viscosity and too high a gel point, on the other hand, prevent correct capsule shaping and, moreover, give rise to undesired, substantial satellite formation.

The viscosity of preferred shell mixtures for the preparation of coating-free capsules was determined using a CVO 120 rheometer (Bohlin Instruments GmbH, Pforzheim). The measurement system used was a plate-plate system with a plate diameter of 50 mm. The measurements were carried out using rotation. The shear rate was 50 s⁻¹; the gap was set at 500 µm. The measurements were carried out isothermally; the temperature was 80 °C.

At 80 °C preferred shell mixtures have a viscosity in the range of 30 mPas to 300 mPas, preferably of 40 mPas to 150 mPas, and particularly preferentially of 50 mPas to 90 mPas.

The gel point of preferred shell mixtures for the preparation of coating-free capsules was likewise determined using a CVO 120 rheometer (Bohlin Instruments GmbH, Pforzheim). The measurement system used was a plate-plate system with a plate diameter of 50 mm. The measurements were carried out using oscillation. The frequency was constant at 1 Hz, the gap was set at 500 µm and the temperature was lowered from 80 °C to 10 °C with a gradient of 5 °C/min. The temperature at which the viscosity or memory module G' is equal to the modulus of elasticity or loss module G" was read off as the gel point, the sol/gel transition point (Thomas Mezger, Das Rheologie Handbuch, 2000).

The gel points of preferred shell mixtures are between 15 °C and 60 °C, preferably between 20 °C and 40 °C and particularly preferentially between 25 °C and 35 °C.

### Gelatine:

The shell of the coating-free capsules (as part of the capsule according to the present invention) contains gelatine or alginate and plasticiser, preference is given to gelatine. The grade and amount of the gelatine and of the plasticiser have an effect on the solubility kinetics of the shell in the mouth.

For shaping of the coating-free capsule, aqueous solutions containing 10-40 % (m/m), preferably 15 - 30 % (m/m) and particularly preferentially 18-25 % (m/m) gelatine are preferably used for the shell.

The gelatine used in the capsules according to the invention is in many cases obtained by partial hydrolysis of collagen-containing material from animals, such as, for example, pigs, cattle, fish or poultry. Type A gelatine is obtained by acid digestion, usually of pig or fish skins, whilst type B gelatine is obtained by alkaline digestion, usually of cattle bones and skins.

The term Bloom is used to characterise the gel strength of gelatine. In the determination of the Bloom value a stamp of a Bloom gelometer or texture analyser 12.7 mm (0.5 inch) in diameter is pressed 4 mm deep into a 6.67 % gelatine gel that has been aged for 18 hours at 10 °C prior to the measurement. The result is given in "Bloom", corresponding to the weight in grams that is loaded onto the stamp in order to achieve the impression depth (see Schormüller, Handbuch der Lebensmittelchemie, Volume III, 1968 and British Standard Method for Sampling and Testing Gelatine (BS757; 1975)).

A gelatine having a Bloom value of more than 200, particularly preferentially having a Bloom value of 240 - 300, and specifically preferably a Type A gelatine is preferably used for the preparation of coating-free capsules according to the invention. By this means adequate stability of the shell is made possible during the preparation of the coating-free capsule and during transport, despite the small thickness of the capsule shell.

Gelatine grades that have been obtained from cattle, poultry or fish are also suitable for the preparation of the capsule according to the invention. In this context, in any event, as already mentioned, care must be taken that the viscosity and the gelling characteristics are correctly adjusted. Fish gelatines that can be used are both grades from cold water fish and grades from warm water fish. Mixtures of different gelatine grades can also be used.

Achieving high process stability of a coating-free capsule coupled with rapid solubility of the capsule shell in the mouth is a particular technical problem. On the one hand, it is advantageous, specifically for the process for preparation of the capsule and for storage, to select a shell formulation that gives the coating-free capsule a particularly high mechanical strength and rapidly forms a solid gel that after drying is as hard as possible and absorbs little water. On the other hand, for a good sensation in the mouth on consumption of the final coated capsule it is advantageous if the shell absorbs water rapidly, is soft and flexible and dissolves quickly.

Surprisingly, it has been found that this particular technical problem can be solved by the use of a mixture of a hydrolysed gelatine with a Bloom value of 0 and a high-Bloom gelatine with a Bloom value of 200 and above (preferably a Bloom value in the range of 240-300). Presumably the high-Bloom gelatine forms a solid network here that is important for the process stability. The hydrolysed O-Bloom gelatine presumably occupies spaces in this network and in the mouth leads to a more rapid absorption of water and thus solubility of the entire shell.

Hydrolysed O-Bloom gelatine has no gelling power and is readily soluble in water at 20 °C. In this O-Bloom gelatine the polypeptide chains have been very substantially decomposed by acid or enzymatic hydrolysis. To date it is therefore also not used for the formation of coating-free capsule shells but is used only, for example, as a nutrient (protein source), as an emulsifier or also for clarifying wine.

Shell mixtures consisting, of (a) hydrolysed 0-Bloom gelatine, that has been obtained from any desired species of animal, with (b) gelatine that has a Bloom value of ≥200 are preferably suitable for solving the particular technical problem, the proportion of hydrolysed 0-Bloom gelatine preferably being in the range of 0.5 - 90 % (m/m), based on the solids content of the shell.

Here the gel point of the high-Bloom gelatine constituent is the decisive factor determining the gel point of the mixtures (see the appended table "Gel points").

The flexibility of a film produced from a shell mixture is, moreover, surprisingly high if the mixture contains O-Bloom gelatine.

A further possibility for solving the abovementioned particular technical problem consists in the mixture of certain low-Bloom (Bloom value < 200) fish gelatines with high-Bloom gelatine (Bloom value ≥200).

The lower the Bloom value of a gelatine, the lower are, in general, the gel point, the viscosity and the mechanical stability of the moist solidified gel. Mixtures of gelatine having a low Bloom value and a medium Bloom value in order to achieve an improved solubility of the coating-free capsule shell in the mouth are known.

US 6,258,380 describes shells of this type. However, in this patent no specification of the gelatines has been given beyond the Bloom value.

Surprisingly, it has now been found that when fish gelatine is used as the gelatine fraction having a low Bloom value (< 200) and at the same time a high-Bloom gelatine having a Bloom value of 200 and above is used, a further improved solubility of the coating-free capsule in the mouth can be achieved. This is presumably effected by the lower gel point of fish gelatines (below 28 °C) compared with pig, cattle and poultry gelatines (approximately 28 - 40 °C).

Fish gelatine grades with a gel point of < 20° C and grades that are prepared from cold water fish, for example cod, are particularly suitable since their gel points at approximately 10 - 20 °C are even below those of gelatines from warm water fish (gel point approximately 20 - 28 °C), such as, for example, from carp. In this context the cold water fish include all species of fish that live predominately in waters at temperatures of 18°C and below. Research by Choi and Regenstein (Journal of Food Science Vol.65, No.2, 2000) and the Applicant's research (see appended table "Gel points") confirm the lower gel points of fish gelatines compared with pig, cattle and chicken gelatines with approximately comparable Bloom values.

Presumably the protein composition is of importance for the lower gel points in fish gelatine grades. The proportions of the amino acids proline and hydroxyproline , are considerably lower in the case of fish gelatines, and specifically especially in the case of cold water fish gelatines, compared with pig, cattle and poultry gelatines. Hydroxyproline and proline play an important role in the cross-linking of the protein helices with one another. Presumably folding of the helices takes place in water, water can be embedded and the solubility rises. The temperature at which this folding takes place depends on the hydroxyproline content and proline content. The lower the content, the lower the temperature at which the gelatine goes into solution.

A low gel temperature and a low solubility temperature is advantageous for good solubility in the mouth.

As a rule it is not possible to achieve adequate process stability of the coating-free capsule by using fish gelatine having a Bloom value of less than 200 as the only type of gelatine in the shell. The gel strength of the coating-free capsule shells that are still moist is frequently not adequate for further processing. The coating-free capsules are frequently mechanically too unstable.

On the other hand, the particular technical problem is solved by the admixture of such a gelatine, as readily soluble filler, to a high-Bloom gelatine that is intended to form a process-stable skeleton. In this context mixtures of fish gelatines with Bloom values of below 200 and high-Bloom pig, cattle or poultry gelatines with a Bloom value of over 200 have proved advantageous. Fish gelatine (below 200 Bloom) contents of 0.5 - 50 % (m/m), based on the solids content of the shell, are preferred. In this context gelatine grades from cold water fish are particularly preferred.

Here it is the gel point of the high-Bloom gelatine fraction that is the decisive factor determining the gel point of the mixtures (see the appended table "gel points").

### Plasticisers:

Plasticisers that can be used in the preparation of the shell are, in particular, polyols, such as, for example, sorbitol, glycerol, propylene glycol, lactitol, hydrated hydrolysed starches and trehalose. Plasticiser fractions improve the consumption characteristics of a capsule in that they reduce the hardness of the shell of the coating-free capsule and improve the solubility in the mouth. Moreover, plasticisers promote the flexibility of the shell and thus the stability during drying of the coating-free capsule and during transport.

Preferred plasticiser contents are not more than 30 % (m/m) based on the total solids content of the shell. Higher amounts of plasticiser make drying of the coating-free capsules more difficult and also make it necessary to use packaging that excludes atmospheric humidity.

Plasticisers are preferably used in the shell in a proportion of 10 - 30 % (m/m), particularly preferentially of 15 - 20 % (m/m), based on the solids content of the shell. The plasticiser preferably comprises one or more polyols, preferably selected from the group which consists of glycerol, propylene glycol, sorbitol and maltitol. Glycerol is the preferred plasticiser.

Plasticiser contents of over 30 % (m/m) make drying of coating-free capsules (as part of the capsules according to the present invention) more difficult and frequently make it necessary to use anti-caking agents, such as silica.

Plasticiser contents of less than 10 % (m/m) allow the capsule shell of a coating-free capsule to become increasingly brittle.

Experiments have shown that, in the case of sorbitol, contents of more than 15 % (m/m) in the shell can already give rise to problems with capsule drying and would then make the undesired use of an anti-caking agent necessary.

### FURTHER (OPTIONAL) CONSTITUENTS OF THE CAPSULE SHELL:

### Sweeteners/ Colourants / Acids / Water / Breath control actives:

In addition to gelatine and plasticiser, the shell of the coating-free capsule (as part of the coated capsule of the present invention) can contain sweeteners, such as, for example, sucralose, aspartame, acesulfame, K or Na saccharine, thaumatin, neohesperidin, or mixtures thereof, as well as water-soluble food colourants.

In addition to the materials mentioned above, the shell of a coating-free capsule can contain acids, in particular of the monoacid, diacid or triacid type, preferably citric acid, fumaric acid, malic acid, lactic acid or acetic acid. The use of at least one such acid makes it possible, in particular, to ensure microbiological stability of the shell of the coating-free capsule and to tailor its sensory properties. In addition the physicochemical properties can be adjusted (pH, solubility).

The coating-free capsules are dried during the production process. During this operation a certain residual amount of water remains bound in the gelatine network. Depending on the ambient moisture content, a water content will be established in the coating-free capsule shell in equilibrium. At 20 °C and 50 % relative atmospheric humidity, the equilibrium moisture content of typical coating-free capsules (as part of the capsules according to the invention) is in the range of approximately 8 - 10 % (m/m) water, based on the total mass of the coating-free capsule shell.

Breath control actives, suitable for inclusion in the shell of the coating-free capsules are quaternary compounds such as pyridinium salts (e.g., cetyl pyridinium chloride), other cationic materials such as chlorhexidine salts, zinc salts, surfactants such as sodium lauryl sulfate, salts such as sodium laurate, chlorophyll, triclosan, copper compounds such as copper gluconate or copper-chlorophyll-extract.

### Hydrocolloids/ gellan gum:

Additions of hydrocolloids to gelatine influence the solubility and thus the absorption of water as well as the temperature stability of the gels formed.

The hydrocolloid gellan gum, in particular, can advantageously be used as an admixture to the gelatine in a shell material mixture for the preparation of a coating-free capsule according to the invention. Gellan gum is a gel-forming polysaccharide that is prepared by fermentation with the aid of microorganisms.

US 4,517,216 already describes mixtures of gelatine and gellan gum. By means of a gellan gum content of 16 % - 83 %, based on the sum of the gellan gum amount and gelatine amount, a high gel strength of the shell is achieved as a result of a synergistic effect. It is also described that only the deacylated and partially deacylated forms of gellan gum give rise to this effect, but not the native gellan gum.

If the multi-component nozzle method with immersed nozzle is to be used for the preparation of a coating-free capsule according to the invention, it is essential when using gellan gum in the shell material to make the correct choice of the gellan gum type and the gellan gum amount so that the shell does not solidify even before formation of the coating-free capsule has been completed. Moreover, the viscosity of the shell solution must not be too high.

In order to achieve an increased temperature stability, gellan gum is advantageously added to the shell mixture for the preparation of a coating-free capsule according to the invention; as a result the softening temperature of the shell increases considerably and the gelling temperature of the mixture is also considerably increased. For the preparation of coating-free capsules according to the invention by the multi-component nozzle method with immersed nozzle, the gelling temperature should not be above 50 °C and the viscosity of the shell solution at 80 °C should not be above 300 mPas; otherwise formation of the coating-free capsule is made more difficult or is not achievable. Therefore, the gellan gum type and amount must be selected in a particularly targeted manner.

There are high-acylated and low-acylated gellan gum grades. A low-acylated gellan gum, preferably the KELCOGEL F grade from Kelco, a division of Merck & Co, is preferably used for the preparation of coating-free capsules according to the invention. Hard, transparent gels can be obtained using low-acylated gellan gum grades.

The preparation of coating-free capsules used in the present invention by the multi-component nozzle process is problematical with a high-acylated gellan gum grade, such as, for example, KELCOGEL LT100 from Kelco, since during capsule shaping the coating-free capsules do not release from the coaxial nozzle without disturbance because of high elasticity of the shell. Moreover, undesired turbid and very highly elastic soft gels are produced.

In a preferred aqueous shell mixture (shell solution) for the preparation of a coating-free capsule according to the invention gelatine, with a content of > 15 % (m/m), based on the total mass of the, shell solution, makes up the major proportion of hydrocolloids used in the total mass. In addition, gellan gum is used in a proportion of at most 0.6 % (m/m), preferably a proportion in the range between 0.2 and 0.5 % (m/m).

Higher proportions of gellan gum substantially increase the viscosity of the shell solution during capsule shaping and substantially reduce the solubility of the dried coating-free capsule shell in the mouth, which is not desired.

Lower proportions of gellan gum have no particular effect with regard to improved temperature stability of the dried coating-free capsule.

The presence of gellan gum leads to the formation of a solid network in the shell of a coating-free capsule according to the invention, which solid network as a rule does not dissolve in the moist state, even at 40 - 60 °C. This network should make up only a relatively small proportion of the shell as a strengthening element. The fractions of non-crosslinked gelatine and further additives such as, for example, plasticisers, should, on the other hand, dissolve particularly rapidly in the mouth.

Coating-free capsules (as part of the capsules according to the invention) that contain gellan gum in a range of 0.4 - 3 % (m/m), preferably of 0.8 - 2 % (m/m), based on the solids content of the shell are preferred. A preferred mass ratio of gellan gum to gelatine in the range of 1:23 to 1:230, preferably of 1:35 to 1:115 is obtained with gelatine contents of 70 - 90 % (m/m), based on the solids content of the shell.

The gelatine fraction in these coating-free capsules can, in particular, also contain fractions of O-Bloom gelatine and/or low-Bloom fish gelatine (in this context see above).

### CORE LIQUID:

When in a process according to the present invention a coating-free capsule is prepared by the multi-component nozzle method the core liquid is hydrophobic and able to form a two-phase system with aqueous solutions.

The core liquid in the coating-free capsule can be liquid or viscous, up to paste-like.

On consumption of the coated capsules according to the invention (capsule diameter in the range of 5 - 9 mm) a relatively large amount of core liquid passes directly into the mouth. This should give rise to an immediate flavour impression, the impact of said flavour impression can be adjusted by type and/or amount of flavouring in the core liquid.

Therefore, mixtures of flavourings with vegetable oils or triglycerides are preferably used for the core liquid. The mixture is preferably a clear solution at room temperature and preferably also still a clear solution 10 °C. Examples of suitable flavourings are synthetic and natural flavourings and mixtures thereof as well as also oleoresins or extracts of plants, leaves, flowers, fruit and the like, as well as combinations thereof. Flavourings from the series comprising peppermint oil, spearmint oil, eucalyptus oil, cinnamon oil, cassia oil, aniseed oil; bitter almond oil, oil of cloves, parsley seed oil, citrus oils, fruity flavouring compositions having tastes oriented towards, for example, apple, pear, peach, grape, strawberry, raspberry, cherry or pineapple are preferably used.

In addition, suitable individual substances as part of the flavourings are those having a cooling refreshing effect in the throat or in the oral or nasal cavity. Those which may be mentioned, by way of example, are menthol, menthone, carboxamides, menthol acetate, menthol methyl ether, methone acetals, menthol carbonates, menthol succinates, 1,8-cineol (eucalyptol), carvone, alpha-terpineol, thymol, methyl salicylate, 2'-hydroxypropiophenone.

### Flavouring content in the liquid or viscous core:

The flavouring content in the core liquid depends, in particular, on the capsule size and the flavouring intensity and according to the invention ranges from 1 - 100 %, based on the total mass of the liquid or viscous core. However, a flavouring content in the liquid or viscous core in the range of 5 - 90 % (m/m), preferably 30 - 80 % %(sic) (m/m), based on the total mass of the liquid or viscous core, is preferred.

### Sweeteners in the liquid or viscous core (optional):

Sweeteners can also be added to the core liquid of a capsule according to the invention, with the use of solubilising agents if appropriate. Since, in accordance with the intention, the core liquid comes into direct contact with the teeth in the mouth, it is advantageous if the core liquid does not exert a pH-lowering action. Otherwise it would not be possible to preclude damage to the enamel.

In the Applicant's research it has now been found that thaumatin, neohesperidine and miraculin (as well as mixtures thereof) are particularly suitable as sweeteners in the core liquid and do not have an adverse effect on the pH value. On solubility grounds thaumatin is particularly preferred.

It has also been found that, on the other hand, other sweeteners that in principle are suitable for use, such as, for example, saccharinic acid or acesulfame K lower the pH value of the aqueous phase and therefore should not be used in relatively high concentrations if the change in the pH in the mouth is to remain tolerable.

### Oils in the liquid or viscous core:

The oils concerned are, in particular, triglycerides, and especially triglycerides of caprylic acid and capric acid, mixtures of triglycerides of the vegetable oil type, olive oil, sunflower oil, corn oil, peanut oil, grapeseed oil, wheatgerm oil, mineral oils and silicone oils. Preferred oils for diluting the flavourings used are, in particular fractionated coconut oils which contain mainly C6-C8 fatty acid radicals. These oils are characterised by their neutral taste and by their good stability to oxidation.

### Further constituents of the liquid or viscous core (optional):

Colouring substances, vitamins (e.g. ascorbic acid, vitamin E), and/or vegetable extracts can be added to the core liquid.

### Actives in the liquid or viscous core (optional):

Antitussive actives can be added and include e.g. dextromethorphan, chlophedianol, carbetapentane, caramiphen, nosciapine, diphenylhydramine, codeine, hydrocodone, hydromorphone, fominoben and benzonatate.

Oral anesthetic actives can be added and include e.g. phenol, lidocaine, dyclonine, benzocaine, menthol, salicyl alcohol and hexylresorcinol.

### FURTHER PROPERTIES OF THE COATING-FREE CAPSULE:

The following properties apply for the coating-free capsules before coating.

### Hardness:

The coating-free capsules used in the present invention preferably have a hardness of 1000 - 4000 g. coating-free capsules which, for example, have a hardness of 1500 - 3500 g for a diameter of 5 mm are preferred. Harder coating-free capsules usually give rise to an unpleasant sensation in the mouth; softer capsules give rise to difficulties during transport since they are not mechanically stable.

In this context the hardness of the coating-free capsules is determined using a texture analyser, for example using a TA-XT2i from Stable Micro Systems. With this method a stamp having a diameter of 2 mm is lowered at a constant forward speed of 0.5 mm/sec onto a coating-free capsule until the shell of this capsule breaks. The hardness of the coating-free capsule is designated as the weight in g that bears on the coating-free capsule at the breaking point.

See the examples for the hardness of coating-free capsules.

### Dissolving power:

The shell of preferred coating-free capsules (as part of the capsules according to the invention) dissolves in the mouth in less than 60 seconds, preferably in less than 45 seconds. The rate of dissolution can be determined by sensory means, the mechanical effects on moving the coating-free capsule in the mouth also being taken into account.

See the examples for the dissolving power of coating-free capsules according to the invention.

### COATING:

The coating mixture is based on solid sugars or sugar alcohols. The solid sugars or sugar alcohols typially are in crystalline form. Sugar alcohols are preferred, particularly for oral care / oral hygiene capsules, for example in breath freshening applications.

The diameter of the capsule of the present invention (i.e. after coating the coating-free capsule), i.e. the final capsule to be placed in the oral cavity, is in the range of 5 - 9 mm.

The coating mixture will normally be applied to the coating-free capsule in aqueous form. Typically the sugars or sugar alcohols are used in the coating process as aqueous solutions.

The coating mixture for use in the preparation process according to the present invention preferably comprises or consists of:
15 to 45% of water, preferably 20 to 40 %
50 to 85 % of sugar(s) or sugar alcohol(s), preferably 60 to 80 %
0 to 5 % of optional constituents

The coating mixture preferably comprises one or more sugar alcohols, preferably selected from the group consisting of erythritol, isomalt, lactitol, maltitol, mannitol, sorbitol, xylitol and hydrogenated starch hydrolysates, isomalt, mannitol and xylitol being preferred.

The coating of the coated capsule according to the present invention comprises one or more sugar(s) or sugar alcohol(s) in an amount from about 30- 90 %, preferably 40 - 85 %, particularly preferentially of 55 - 80 %, based on the total mass of the coated capsule.

The residual amount of water in the coating after the coating process typically is smaller than 2%, most typically smaller than 1%, based on the weight of the coating of the coated capsule.

The coating mixture is usually applied to the coating-free capsule via well-known panning or dragee coating processes, involving dragee pan, coating turbine, tumbler or the like.

During the coating process, the coating is applied to the coating-free capsule in several layers, 5 to 80 layers are typical, 10 to 50 layers are preferred.

The number of layers can be widely varied within the mass limits of sugar(s) or sugar alcohol(s) given above, depending on the capsule properties to be achieved.

### (OPTIONAL) CONSTITUENTS OF THE COATING:

To improve the adhesion or bonding of the coating to the coating-free capsule, the surface of the coating-free capsule can be roughened or auxiliary materials can be applied to the coating-free capsule before the coating process with the sugar or sugar alcohol based coating materials is carried out.

Roughening of the surface of the coating-free capsule usually is achieved by adding corn starch or similar adjuvants in powder form to the wet coating-free capsule before the drying step.

Suitable auxiliary materials are gum arabic, maltodextrin, starch, sugar, sugar alcohol or gelatine, applied in form of an aqueous solution (content of auxiliary materials about 40 to about 60%). Typically the coating-free capsule is coated with one ore two layers of auxiliary material before performing the actual coating process with the sugar or sugar aclohol based coating materials.

In addition, during application of the auxiliary material to the coating-free capsule, it is possible to add actives to the aqueous solution auxiliary material. For example, suitable actives are the breath control actives, antitussive actives or oral anesthetic actives given above.

If desired, flavourings, like those mentioned above as constituent of the liquid or viscous core, can be added to the coating mixture.

Solid acids such as acids of the monoacid, diacid or triacid type, preferably citric acid, fumaric acid, malic acid, or lactic acid. The use of at least one such acid makes it possible, to tailor its sensory properties. Typically the amount of acid(s) added to the coating mixture is from about 0.5 to about 1.5%.

Colourants or dyes applicable in the coating are water-soluble food colourants, e.g. FD&C Blue #5, FD&C Yellow #1, brilliant blue, allura red, or inorganic pigments, like edible metal oxides, e.g. titanium dioxide.

If a shiny final coating is preferred, waxes or shellac can be applied to the coated capsules, usually one or two layers of wax or shellac are sufficient. In addition the shiny final coating can prevent the coated capsules from sticking to eachother and from sticking to the hands of the consumer.
Waxes, like bees wax, carnauba wax or paraffines are applied in pure form. Shellac usually is used as an 3 to 10% aqueous solution.

### Appearance:

Capsules according to the invention are ball-shaped (spherical).
The ratio between the largest and the smallest diameter of a spherical coated capsule according to the invention is not more than 1.2, preferably not more than 1.1.

### EXAMPLES:

Preferred embodiments of the invention are explained in more detail below on the basis of examples.

### Examples 1-7: Method for the preparation of coating-free capsules (used in the preparation of coated capsules according to the invention) - general procedure (multi-component nozzle method with immersed nozzle).

The constituents indicated in the appended table "Examples 1 - 7" for the shell mixture are added together and heated to 80 °C in a water bath until a clear solution that is essentially free from air bubbles has formed. Preferably solutions with solid contents of 20 - 40 % (m/m) are used.

The core liquid is prepared at 10 - 20 °C.

Shell liquid and core liquid are fed via a pump system to a concentric two-component nozzle. The line for the shell liquid is kept at 60 - 80 °C during this operation. The concentric two-component nozzle dips into a liquid bath that is filled with vegetable oil. The temperature of this oil bath is approximately 14 °C.

With support from additional vibrational stimulus of the liquid, the liquid jet issuing from the nozzle into the oil bath disintegrates into individual droplets which are seamless coating-free capsules consisting of core and shell.

Adhering oil is removed from the capsules by centrifuging while the coating-free capsules are still wet and the capsules are then dried with continuous motion in a dry stream of air. Conventional vortex dryers or drum dryers can be used. The prerequisite for a good drying result is that the capsules can be kept in motion by rotation or by turbulent air. In some cases it is advisable to use an antiblocking agent for this purpose.

However, in most cases the use of an antiblocking agent is not desired. Specifically, a transparent and glossy shell is obtained if the composition of the shell mixture is so chosen that it is possible to dispense with the use of an antiblocking agent such as, for example, silica during drying and there is nevertheless no sticking of the coating-free capsules.

### Examples 1 - 7 :

Composition and consumption characteristics of the dried coating-free capsules / *Note: Adhering residual water depends on the atmospheric humidity and can therefore vary.

| No. | Diameter of coating-free capsule [mm] | Shell thickness [µm] | Shell thickness/capsule diameter ratio | Shell content [% (m/m)] | Core content [% (m/m)] | Composition of shell | Composition of core | Hardness [g] | Dissolution in the mouth [sec] |
|---|---|---|---|---|---|---|---|---|---|
| 1 | 5 | 50 | 0.010 | 7.5 | 92.5 | 80 % pig gelatine 260 Bloom | 30 % peppermint flavouring | 3380 | 25 sec |
| | | | | | | 10 % glycerol | 70 % vegetable oil | | |
| | | | | | | 10 % water* | | | |
| 2 | 5 | 64 | 0.013 | 9 | 91 | 70 % pig gelatine 260 Bloom | 40% peppermint flavouring | 1880 | 40 sec |
| | | | | | | 20 % glycerol | 60% vegetable oil | | |
| | | | | | | 10 % water* | | | |
| | | | | | | 0.5 % aspartame | | | |
| | | | | | | 0.5 % acesulfame K | | | |
| | | | | | | 0.1 % brilliant blue | | | |
| 3 | 5 | 55 | 0.01 | 7.5 | 92.5 | 60 % pig gelatine 260 Bloom | 15 % peppermint flavouring 85 % vegetable oil | 900 | 25 sec |
| | | | | | | 30 % propylene glycol | | | |
| | | | | | | 10 % water* | | | |
| 4 | 5 | 72 | 0.014 | 9 | 91 | 80% pig gelatine 260 Bloom | 15 % peppermint flavouring | 4000 | 40 sec |
| | | | | | | 10 % Sorbitol | 85 % vegetable oil | | |
| | | | | | | 10 % water* | | | |
| 5 | 5 | 60 | 0.012 | 7.5 | 92.5 | 70 % cattle gelatine 240 Bloom | 30 % cinnamon flavouring | 2150 | 45 sec |
| | | | | | | 20 % glycerol | 70 % vegetable oil | | |
| | | | | | | 10 % water* | | | |
| | | | | | | 0.2 % allura red | | | |
| 6 | 5 | 66 | 0.013 | 11 | 89 | 70 % chicken gelatine 250 Bloom | 65% mint flavouring | 3800 | 35 sec |
| | | | | | | 20 % glycerol | 35% vegetable oil | | |
| | | | | | | 10 % water* | | | |
| | | | | | | 2.0 % sucralose | | | |
| | | | | | | 0.1 % brilliant blue | | | |
| 7 | 5 | 72 | 0.014 | 11 | 89 | 70 % fish gelatine 165 Bloom | 65% mint flavouring | 2500 | 30 sec |
| | | | | | | 20 % glycerol | 35% vegetable oil | | |
| | | | | | | 10 % water* | | | |
| | | | | | | 2 % gellan gum KELCOGEL F | | | |
| | | | | | | 2.0 % sucralose | | | |
| | | | | | | 0.1 % brilliant blue | | | |

**Table: Gel points**

| Composition of the aqueous shell solution | Gel point | Viscosity at 80 °C | Flexibility* |
|---|---|---|---|
| 75 % water | 34 °C | 61 mPas | low |
| 20 % cattle gelatine 240 Bloom | | | |
| 5 % glycerol | | | |
| 75 % water | 35 °C | 71 mPas | low |
| 20 % chicken gelatine 250 Bloom | | | |
| 5 % glycerol | | | |
| 75 % water | 30 °C | 130 mPas | moderate |
| 10 % pig gelatine 260 Bloom | | | |
| 10 % fish gelatine 110 Bloom | | | |
| 5 % glycerol | | | |
| 75 % water | 29 °C | 90 mPas | high |
| 15 % pig gelatine 260 Bloom | | | |
| 5 % fish gelatine 0 Bloom | | | |
| 5 % glycerol | | | |
| 75 % water | 32 °C | 85 mPas | high |
| 15 % chicken gelatine 250 Bloom | | | |
| 5 % fish gelatine 0 Bloom | | | |
| 5 % glycerol | | | |

| | | | |
|---|---|---|---|
| Flexibility*: Assessment on bending over a 200 µm thick film which had been produced from the shell solution by pouring out and drying in air (20 °C, 40 % relative atmospheric humidity, at least 20 h). | | | |

### Example 8: Method for the preparation of coated capsules according to the invention

As described for the examples 1-7 above, coating-free capsules with a diameter of 5 mm were prepared, having the following composition:

**Core: 900 parts by weight**

| **Core ingredient** | **% by weight** |
|---|---|
| Peppermint oil | 28.8 |
| fractioned Coconut oil | 61.04 |
| Neotame | 0.06 |
| Sucralose | 1.2 |
| Limonene | 2.5 . |
| Frescolat^{®} ML | 2.5 |
| Frescolat^{®} MPC | 1.4 |
| Diethyl tartrate | 2.2 |
| Vitamin E - acetate | 0.3 |

| | |
|---|---|
| Frescolat^{®} ML = menthyl lacetate (Symrise GmbH & Co. KG) Frescolat^{®} MPC = menthol propyleneglycol carbonate (Symrise GmbH & Co. KG) | |

**Shell: 100 parts by weight**

| **Shell ingredient** | **% by weight** |
|---|---|
| Water | 2.9 |
| Glycerol | 20.3 |
| Gelatine 240 Bloom | 76.1 |
| Sucralose | 0.6 |
| FD&C Blue #5 | 0.1 |

### Coating of the coating-free gelatine spherical capsules

5 kg of the coating-free capsules were placed in a panning machine (DSG 20V/10, Acosystems Prozesstechnologie GmbH, Delligsen, Germany). All coating steps were carried out in this panning machine.

To improve the adhesion of the sugar alcohol coating to be applied in the next step, two layers of gum arabic (50% in water) were applied to the coating-free capsules. These capsules were then placed on trays and dried in a drying chamber at 35 to 45°C, the airstream having a velocity of 1 to 5 m/s.

In a first coating step, an 68-72% aqueos solution of isomalt was used as coating mixture and 10 layers were applied to the dried gum arabic encased capsules.

In the next coating step, these capsules were then coated with 15 layers using the following coating mixture: 68% isomalt, 5% titanium dioxide and 27% of water. The capsules now have a bright white appearance.

The coating process may be stopped at this point of the process, the capsules now have the desired properties.

In a further step the obtained capsules were then coated with 8 layers using the following coating mixture: 65% isomalt and 35% water. The capsules now have a smoother surface.

In a further step the obtained capsules were then coated with 12 layers using the following coating mixture: 65% isomalt, 5% of an aqueous solution of a mixture of FD&C Blue #1 and D&C Red #33, and 30% water. The capsules now have a smoother surface and a purple color.

In order to remove residual amounts of water from the coating, the resulting capsules are then placed on trays and dried for 12 hours in a drying chamber at 25 to 40°C, the airstream having a velocity of 1 to 5 m/s.

The final coated capsules had the following properties:
coating-free capsules: 5 mm diameter; 10% shell, 90% core liquid
weight per coating-free capsule: 61 mg
coated capsules: 7 mm diameter, 77% of the total capsule weight is isomalt (sugar alcohol)
used in the coating
weight per coated capsule: 265 mg

Optionally, a shiny final layer of carnauba wax can be added to the coated capsules.

## Claims

1. Spherical coated capsule comprising
(a) a coating-free capsule having (i) a liquid or viscous core and (ii) a seamless solid shell surrounding this core, and
(b) a seamless, solid coating surrounding said coating-free capsule, wherein
- the diameter of the coated capsule is in the range of 5 - 9 mm,
- the solid coating comprises at least one sugar or sugar-alcohol in an amount from about 30 - 90% (m/m), based on the total mass of the coated capsule,
- the diameter of the coating-free capsule is in the range of 3 - 7 mm,
- the thickness of the shell of said coating-free capsule is in the range of 20 - 200 µm,
- the ratio of shell thickness to diameter of said coating-free capsule is in the range of 0.004 - 0.04 ,
- the shell of said coating-free capsule contains 70 - 90 % (m/m) gelatine or alginate and 10 - 30% (m/m) plasticiser, based on the solids content of said shell, and
- the core has a flavouring content in the range of 1 - 100 % (m/m), based on the total mass of the core.

2. Spherical coated capsule according to claim 1, wherein an intermediate layer or intermediate layers are arranged between said shell and said coating, for improving the adhesion between shell and coating.

3. Spherical coated capsule according to claim 2, wherein the intermediate layer consists of (i) gum arabic, maltodextrin, starch, sugar, sugar alcohol, gelatine, or a mixture therof, and, optionally, (ii) water.

4. Spherical coated capsule according to any of claims 1-3, the coating having one or more outer layers providing a smooth surface, the outer layer or layers consisting of (i) a sugar and/or sugar alcohol, and, optionally, water.

5. Capsule according to any preceding claim, **characterised in that**
- the diameter of the coating-free capsule is in the range of 4.5 - 6.5 mm, preferably 4.5 -5.5 mm,
- the thickness of the shell is in the range of 50 - 150 µm, preferably 50 - 90 µm,
- the shell thickness to capsule diameter ratio is in the range of 0.01 - 0.03, preferably 0.01 - 0.02.

6. Capsule according to any preceding claims, **characterised in that** the shell is prepared from a mixture containing gelatine and plasticiser which has a gel point in the range between 15°C and 60 °C, preferably between 20 °C and 40 °C and particularly preferentially between 25 °C and 35 °C.

7. Capsule according to any preceding claim, **characterised in that** (a) a gelatine having a Bloom value of at least 200, preferably a Bloom value in the range of 240 - 300, is used for the preparation of the shell.

8. Capsule according to Claim 7, **characterised in that** in addition (b) a gelatine having a Bloom value of 0 and/or fish gelatine having a Bloom value of < 200 is used.

9. Capsule according to any preceding claim, wherein the fish gelatine is a cold water fish gelatine and/or has a gel point of < 20°C.

10. Capsule according to any preceding claim, **characterised in that** the liquid or viscous core contains a sweetener that has been selected from the group that consists of thaumatin, neohesperidine, miraculin and mixtures thereof.

11. Capsule according to any preceding claim, **characterised in that** the concentration of the plasticiser in the shell is 10 - 30 % (m/m), preferably 15 - 20 % (m/m), based on the total solids content of the shell.

12. Capsule according to any preceding claim, **characterised in that** the plasticiser comprises one or more polyols, preferably selected from the group that consists of glycerol, propylene glycol, sorbitol and maltitol.

13. Capsule according to any preceding claim, **characterised in that** the gelatine has been selected from the group that consists of pig gelatine, cattle gelatine, chicken gelatine, fish gelatine and mixtures thereof.

14. Capsule according to any preceding claim, **characterised in that** the shell contains a sweetener that preferably has been selected from the group that consists of sucralose, aspartame, acesulfame K, thaumatin, Na saccharine, neohesperidin and mixtures thereof.

15. Capsule according to any preceding claim, **characterised in that** the shell contains gellan gum.

16. Capsule according to any preceding claim, **characterised in that** the shell contains 0.4 - 3 % (m/m) gellan gum, based on the solids content of the shell.

17. Method for the preparation of a capsule according to one of the preceding claims, with the following steps:
- pumping a liquid or viscous core material and a gelatine or alginate-containing curable shell mixture simultaneously through a concentric multi-component nozzle so that they drip into a cooling liquid with the formation of a capsule,
- drying said capsule, and
- coating the resulting dried capsule, optionally only after applying an intermediate layer or intermediate layers to the dried capsule.

## Patentansprüche

1. Sphärische überzogene Kapsel umfassend
(a) eine überzugsfreie Kapsel mit (i) einem flüssigen oder viskosen Kern und (ii) einer nahtlosen, festen, diesen Kern umgebenden Hülle, und
(b) einen nahtlosen, festen, die überzugsfreie Kapsel umgebenden Überzug, wobei
- der Durchmesser der überzogenen Kapsel im Bereich von 5-9 mm ist,
- der feste Überzug mindestens einen Zucker oder Zuckeralkohol in einer Menge von ca. 30 - 90% (m/m) umfasst, bezogen auf die Gesamtmasse der überzogenen Kapsel,
- der Durchmesser der überzugsfreien Kapsel im Bereich von 3-7 mm ist,
- die Dicke der Hülle der überzugsfreien Kapsel im Bereich von 20 - 200 µm ist,
- das Verhältnis der Hüllendicke zum Durchmesser der überzugsfreien Kapsel im Bereich von 0,004 - 0,04 ist,
- die Hülle der überzugsfreien Kapsel 70 - 90% (m/m) Gelatine oder Alginat und 10 - 30% (m/m) Weichmacher enthält, bezogen auf den Feststoffgehalt der Hülle, und
- der Kern einen Aromastoffgehalt im Bereich von 1 - 100% (m/m) hat, bezogen auf die Gesamtmasse des Kerns.

2. Sphärische überzogene Kapsel nach Anspruch 1, wobei eine Zwischenschicht oder Zwischenschichten zwischen der Hülle und dem Überzug angeordnet sind, um die Adhäsion zwischen Hülle und Überzug zu verbessern.

3. Sphärische überzogene Kapsel nach Anspruch 2, wobei die Zwischenschicht besteht aus (i) Gummi arabicum, Maltodextrin, Stärke, Zucker, Zuckeralkohol, Gelatine oder einer Mischung hiervon, und optional (ii) Wasser.

4. Sphärische überzogene Kapsel nach einem der Ansprüche 1 bis 3, wobei der Überzug eine oder mehrere, für eine glatte Oberfläche sorgende äußere Schichten hat, wobei die äußere(n) Schicht(en) aus (i) einem Zucker und/oder Zuckeralkohol, und optional Wasser, bestehen.

5. Kapsel nach einem der vorangehenden Ansprüche, **dadurch gekennzeichnet, dass**
- der Durchmesser der überzugsfreien Kapsel im Bereich von 4,5 - 6,5 mm, vorzugsweise 4,5 - 5,5 mm ist,
- die Dicke der Hülle im Bereich von 50 - 150 µm, vorzugsweise 50 - 90 µm ist,
- das Verhältnis der Hüllendicke zum Kapseldurchmesser im Bereich von 0,01 - 0,03, vorzugsweise 0,01 - 0,02 ist.

6. Kapsel nach einem der vorangehenden Ansprüche, **dadurch gekennzeichnet, dass** die Hülle aus einer Gelatine und Weichmacher enthaltenden Mischung hergestellt ist, die einen Gelierpunkt im Bereich zwischen 15°C und 60°C, bevorzugt zwischen 20°C und 40°C und besonders bevorzugt zwischen 25°C und 35°C hat.

7. Kapsel nach einem der vorangehenden Ansprüche, **dadurch gekennzeichnet, dass** (a) eine Gelatine mit einem Bloom-Wert von mindestens 200, vorzugsweise einem Bloom-Wert im Bereich von 240 - 300, zur Herstellung der Hülle verwendet wird.

8. Kapsel nach Anspruch 7, **dadurch gekennzeichnet, dass** zusätzlich (b) eine Gelatine mit einem Bloom-Wert von 0 und/oder Fisch-Gelatine mit einem Bloom-Wert von < 200 verwendet wird.

9. Kapsel nach einem der vorangehenden Ansprüche, wobei die Fisch-Gelatine eine Kaltwasserfisch-Gelatine ist und/oder einen Gelierpunkt von < 20°C hat.

10. Kapsel nach einem der vorangehenden Ansprüche, **dadurch gekennzeichnet, dass** der flüssige oder viskose Kern ein Süßungsmittel enthält, das ausgewählt worden ist aus der Gruppe bestehend aus Thaumatin, Neohesperidin, Miraculin und Mischungen hiervon.

11. Kapsel nach einem der vorangehenden Ansprüche, **dadurch gekennzeichnet, dass** die Konzentration des Weichmachers in der Hülle 10 - 30% (m/m) ist, vorzugsweise 15 - 20% (m/m), bezogen auf den Gesamtfeststoffgehalt der Hülle.

12. Kapsel nach einem der vorangehenden Ansprüche, **dadurch gekennzeichnet, dass** der Weichmacher ein oder mehrere Polyole umfasst, vorzugsweise ausgewählt aus der Gruppe bestehend aus Glycerin, Propylenglycol, Sorbit und Maltit.

13. Kapsel nach einem der vorangehenden Ansprüche, **dadurch gekennzeichnet, dass** die Gelatine ausgewählt worden ist aus der Gruppe besehend aus Schweine-Gelatine, Rinder-Gelatine, Hühner-Gelatine, Fisch-Gelatine und Mischungen hiervon.

14. Kapsel nach einem der vorangehenden Ansprüche, **dadurch gekennzeichnet, dass** die Hülle ein Süßungsmittel enthält, das vorzugsweise ausgewählt worden ist aus der Gruppe bestehend aus Sucralose, Aspartam, Acesulfam K, Thaumatin, Na-Saccharin, Neohesperidin und Mischungen hiervon.

15. Kapsel nach einem der vorangehenden Ansprüche, **dadurch gekennzeichnet, dass** die Hülle Gellan enthält.

16. Kapsel nach einem der vorangehenden Ansprüche, **dadurch gekennzeichnet, dass** die Hülle 0,4 - 3% (m/m) Gellan enthält, bezogen auf die Feststoffgehalt der Hülle.

17. Verfahren zur Herstellung einer Kapsel nach einem der vorangehenden Ansprüche, mit den folgenden Schritten:
- Simultanes Pumpen eines flüssigen oder viskosen Kernmaterials und einer Gelatine oder Alginat enthaltenden, härtbaren Hüllenmischung durch eine konzentrische Mehrkomponenten-Düse, so dass sie unter Bildung einer Kapsel in eine Kühlflüssigkeit tropfen,
- Trocknen der Kapsel, und
- Überziehen der resultierenden getrockneten Kapsel, optional erst nach Aufbringen einer Zwischenschicht oder von Zwischenschichten auf die getrocknete Kapsel.

## Revendications

1. Capsule enrobée sphérique comprenant
(a) une capsule sans enrobage ayant (i) un noyau liquide ou visqueux et (ii) une enveloppe solide sans soudure entourant ce noyau, et
(b) un enrobage solide sans soudure entourant ladite capsule sans enrobage, où
- le diamètre de la capsule enrobée est dans la plage de 5-9 mm,
- l'enrobage solide comprend au moins un sucre ou un alcool de sucre en une quantité d'environ 30-90 % (m/m), basée sur la masse totale de la capsule enrobée,
- le diamètre de la capsule sans enrobage est dans la plage de 3-7 mm,
- l'épaisseur de l'enveloppe de ladite capsule sans enrobage est dans la plage de 20-200 µm,
- le rapport de l'épaisseur de l'enveloppe au diamètre de ladite capsule sans enrobage est dans la plage de 0,004-0,04,
- l'enveloppe de ladite capsule sans enrobage contient 70-90 % (m/m) de gélatine ou d'alginate et 10-30 % (m/m) de plastifiant, basé sur la teneur en solides de ladite enveloppe, et
- le noyau a une teneur en arôme dans la plage de 1-100 % (m/m), basé sur la masse totale du noyau.

2. Capsule enrobée sphérique selon la revendication 1 où une couche intermédiaire ou des couches intermédiaires est ou sont disposées entre ladite enveloppe et ledit enrobage, pour améliorer l'adhésion entre l'enveloppe et l'enrobage.

3. Capsule enrobée sphérique selon la revendication 2 où la couche intermédiaire consiste en (i) gomme arabique, maltodextrine, amidon, sucre, alcool de sucre, gélatine ou un mélange de ceux-ci et, éventuellement, (ii) eau.

4. Capsule enrobée sphérique selon l'une quelconque des revendications 1-3, l'enrobage ayant une ou plusieurs couches externes produisant une surface lisse, la couche externe ou les couches externes consistant en (i) un sucre et/ou un alcool de sucre, et, éventuellement, de l'eau.

5. Capsule selon l'une quelconque des revendications précédentes, **caractérisée en ce que**
- le diamètre de la capsule sans enrobage est dans la plage de 4,5-6,5 mm, de préférence 4,5-5,5 mm,
- l'épaisseur de l'enveloppe est dans la plage de 50-150 µm, de préférence 50-90 µm,
- le rapport de l'épaisseur de l'enveloppe au diamètre de la capsule est dans la plage de 0,01-0,03, de préférence 0,01-0,02.

6. Capsule selon l'une quelconque des revendications précédentes, **caractérisée en ce que** l'enveloppe est préparée à partir d'un mélange contenant de la gélatine et un plastifiant qui a un point de gélification dans la plage entre 15°C et 60°C, de préférence entre 20°C et 40°C et de manière particulièrement préférable entre 25°C et 35°C.

7. Capsule selon l'une quelconque des revendications précédentes, **caractérisée en ce que** (a) une gélatine ayant un degré Bloom d'au moins 200, de préférence un degré Bloom dans la plage de 240-300, est utilisée pour la préparation de l'enveloppe.

8. Capsule selon la revendication 7, **caractérisée en ce que**, en outre, (b) une gélatine ayant un degré Bloom de 0 et/ou une gélatine de poisson ayant un degré Bloom < 200 est utilisée.

9. Capsule selon l'une quelconque des revendications précédentes où la gélatine de poisson est une gélatine de poisson d'eau froide et/ou a un point de gélification < 20°C.

10. Capsule selon l'une quelconque des revendications précédentes, **caractérisée en ce que** le noyau liquide ou visqueux contient un édulcorant qui a été choisi dans le groupe qui consiste en la thaumatine, la néohespéridine, la miraculine et leurs mélanges.

11. Capsule selon l'une quelconque des revendications précédentes, **caractérisée en ce que** la concentration du plastifiant dans l'enveloppe est 10-30 % (m/m), de préférence 15-20 % (m/m), basée sur la teneur en solides totale de l'enveloppe.

12. Capsule selon l'une quelconque des revendications précédentes, **caractérisée en ce que** le plastifiant comprend un ou plusieurs polyols, de préférence choisis dans le groupe qui consiste en le glycérol, le propylèneglycol, le sorbitol et le maltitol.

13. Capsule selon l'une quelconque des revendications précédentes, **caractérisée en ce que** la gélatine a été choisie dans le groupe qui consiste en la gélatine de porc, la gélatine de bétail, la gélatine de poulet, la gélatine de poisson et leurs mélanges.

14. Capsule selon l'une quelconque des revendications précédentes, **caractérisée en ce que** l'enveloppe contient un édulcorant qui a été choisi de préférence dans le groupe qui consiste en le sucralose, l'aspartame, l'acésulfame K, la thaumatine, la saccharine sodique, la néohespéridine et leurs mélanges.

15. Capsule selon l'une quelconque des revendications précédentes, **caractérisée en ce que** l'enveloppe contient de la gomme de gellane.

16. Capsule selon l'une quelconque des revendications précédentes, **caractérisée en ce que** l'enveloppe contient 0,4-3 % (m/m) de gomme de gellane basée sur la teneur en solides de l'enveloppe.

17. Procédé pour la préparation d'une capsule selon l'une des revendications précédentes, avec les étapes suivantes :
- pomper une substance pour noyau liquide ou visqueuse et un mélange pour enveloppe durcissable contenant de la gélatine ou de l'alginate simultanément au travers d'une buse à composants multiples concentriques de sorte qu'ils tombent dans un liquide de refroidissement avec la formation d'une capsule,
- sécher ladite capsule, et
- enrober la capsule séchée résultante, éventuellement seulement après l'application d'une couche intermédiaire ou de couches intermédiaires à la capsule séchée.
